# EUROPEAN PATENT APPLICATION

(11) **EP 3 236 040 A1**
(43) Date of publication of application: **25.10.2017**
(21) Application number: 17164781.1
(22) Date of filing: 04.04.2017
(51) Int. Cl.: F01P 7/06, F01P 11/12, F01P 5/06, F04D 29/36

(54) **AIR CLEANING ARRANGEMENT FOR A WORK VEHICLE**

(30) Priority: 11.04.2016 US 201615095193
(71) Applicant: Deere & Company, Moline, IL 61265 (US)
(72) Inventor: LOCKE, Michael, 68163 Mannheim (DE); GEYER, John R., 68163 Mannheim (DE); SERGEYEV, Andrey A., 68163 Mannheim (DE); WEINSCHENK, Lavern, 68163 Mannheim (DE)
(74) Representative: Holst, Sönke

(57) **Abstract**

An air cleaning element comprises a generally rectangular frame comprising a first two opposing sides and a second two opposing sides; a plurality of rods supported on and extending between the first two opposing sides, wherein each rod is offset from its two adjacent rods; and a wire mesh sheet that is generally rectangular and corrugated around the plurality of rods. The sheet extends to and between the two opposing sides.

## Description

### Field of the Invention

This invention relates generally to work vehicles. More particularly it relates to air cleaning arrangements for work vehicles. Even more particularly it relates to air cleaning screens and fans for work vehicles.

### Background of the Invention

Work vehicles such as tractors and windrowers and combines operate in agricultural fields that contain a large amount of vegetable matter such as leaves, sticks, cobs, husks, and the like. This vegetable matter is both produced and stirred up by the activities of the work vehicles in the field.

It is quite common for such work vehicles to stir up clouds of this light vegetable matter around the vehicle.

Some work vehicles (particularly combines) use large quantities of air to perform their basic functions, such as cooling their engines and separating grain from material other than grain (MOG) such as light vegetable matter.

It is important that these large quantities of air be cleaned before the air passes into the work vehicle. If it is not cleaned, the light vegetable matter will fill internal spaces of the vehicles, prevent airflow, and block the proper functioning of the vehicle.

Various solutions have been proposed to deal with this problem. In combines, one of the common solutions has been to provide a large rotating air cleaning element that is rotated against a separate cleaning device. As the cleaning element is rotated against the cleaning device, the cleaning device directs a reverse flow of air through the cleaning element. This reverse flow of air blows the vegetable matter off the face of the cleaning element.

In one of these common arrangements (US 7875093 B1), the rotating filter element is a large flat circular disk of screening material. A motor rotates the rotating filter element through a small cleaning device. The cleaning device includes a conduit connected to a vacuum source to suck the vegetable matter off the face of the screening material. In these arrangements, the disk goes through one rotation several times an hour.

In another of these common arrangements (US 4874411) a cylindrical filter element made of punched metal is driven in rotation by a motor. This causes the filter element to pass in front of a cleaning device. The cleaning device applies a vacuum to an outer face of the cylinder and sucks the vegetable matter off the face of the screening material.

One of the common problems to these arrangements is the large size of the cleaning element. The volume of air required in agricultural combines is quite large. At the same time, the cleaning element cannot have a complex shapes with many cavities and depressions (which are provided to increase its effective surface working area) since it would be impossible to reach into those cavities and depressions with a simple cleaning device. Hence the cleaning element is typically made of sheet metal with many holes punched therethrough.

What is needed is an improved air cleaning arrangement that has good filtration, debris rejection, and airflow characteristics. It is an object of this invention to provide such an air cleaning arrangement.

### Summary of the Invention

In accordance with a first aspect of the invention, an air cleaning element comprises a generally rectangular frame comprising a first two opposing sides and a second two opposing sides; a plurality of rods supported on and extending between the first two opposing sides, wherein each rod is offset from its two adjacent rods; and a wire mesh sheet having two ends, wherein the sheet is generally rectangular and wherein the sheet is corrugated around the plurality of rods and wherein the sheet extends to and between the two opposing sides.

The plurality of rods may be parallel to each other.

The plurality of rods may be equidistantly spaced from each other.

A first end of the two ends of the sheet may be anchored to a first of the second two opposing sides over substantially the entire length of the first of the second two opposing sides, and a second end of the two ends of the sheet may be anchored to a second of the second two opposing sides over substantially the entire length of the second of the second two opposing sides.

The air cleaning element may further comprise first and second elongate strips fixing opposite ends of the wire mesh to first and second ones of the second opposing sides, respectively.

The air cleaning element may further comprise a plurality of fasteners fixing the first and second elongate strips to the frame.

The two ends of the wire mesh sheet may be fixed between the frame and the first and second strips.

The plurality of rods may be disposed to shape and/or hold the wire mesh into a plurality of corrugations to thereby form a corrugated sheet.

Each of the plurality of corrugations may be disposed at an angle of between 30 and 60 degrees with respect to the air cleaning element overall.

In accordance with a second aspect of the invention, an air cleaning arrangement is provided comprising the air cleaning element; an air conduit disposed to channel air to substantially an entire face of the air cleaning element; a fan having a variable pitch fan hub disposed in the air conduit, wherein the fan is disposed in the conduit to drive air through the entire face of the air cleaning element; and an ECU coupled to the variable pitch fan hub, wherein the ECU is configured to periodically reverse the pitch of the variable pitch fan hub such that flow is periodically reversed through the air cleaning element.

### Brief Description of the Drawings

- Fig. 1: is a plan view of an air cleaning element in accordance with the present invention.
- Fig. 2: is a right side view of the air cleaning element of Figure 1.
- Fig. 3: is a cross-sectional view of the air cleaning element of the previous figures taken at section line 3-3 in Figure 1.
- Fig. 4: is a schematic side view of an air cleaner arrangement employing the air cleaning element of Figures 1-3.

### Detailed Description of the Drawings

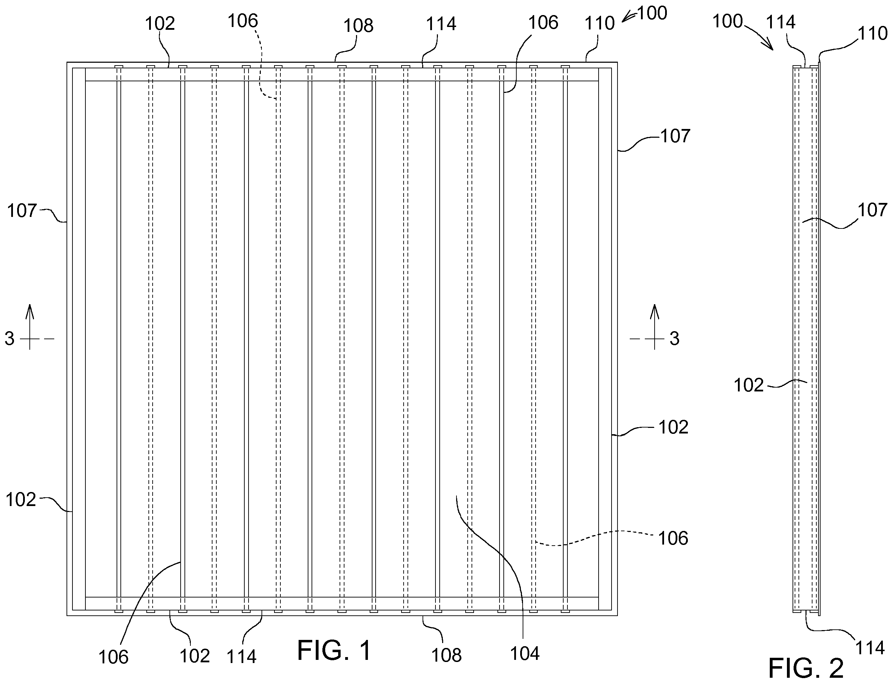

Figures 1-3 show an air cleaning element 100 for cleaning vegetable matter from a flow of air in a work vehicle. The air cleaning element 100 comprises a frame 102 that supports a cleaning media 104. The cleaning media 104 is threaded around support members 106. Support members 106 are elongate and are each supported at its opposing ends in the frame 102.

The frame 102 is rectangular. It is made of sheet metal which is bent to form four sides 108. The sheet metal forming each of the four sides 108 is further bent to form an outwardly extending flange 110 which is used to fix the air cleaning element 100 to the work vehicle. Flange 110 extends generally parallel to the plane of the air cleaning element 100.

The sheet metal forming each of the four sides 108 is further bent to form an inwardly extending flange 112 which provides additional stiffness to the air cleaning element and anchors the free ends of the cleaning media 104. The flange 112 extends generally parallel to the plane of the overall cleaning element 100. A central portion 114 of each side 108 (from which the flanges are bent) faces inwardly and serves to anchor the opposing ends of the support members 106. The central portion 114 extends generally perpendicular to the plane of the air cleaning element 100.

The cleaning media 104 is comprised of a wire mesh. The wire mesh is woven to form openings of about 1 mm in width and height.

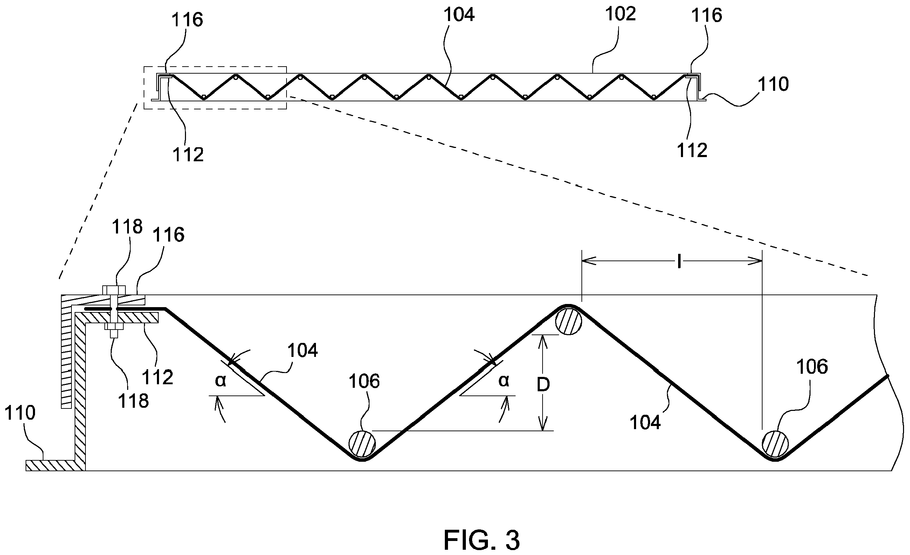

The support members 106 are formed as elongated rods that are anchored at their two opposing ends to two opposing sides 108 of the frame 102, respectively. Holes are formed in the two opposing sides 108 of the frame 102 into which the rods are inserted, and to which the rods are welded. The rods may be solid or they may be hollow. They may be circular, oval, or polygonal in cross-section. They are preferably circular in cross-section to more gently bend the cleaning media 104 and reduce fatigue. The rods are staggered a distance "D" (Figure 3) along the entire length of the air cleaner element 100 to hold the cleaning media 104 in a corrugated (zigzag) shape. The distance D is preferably between 25 and 75 mm.

By forming the cleaning media 104 in a corrugated shape, the total surface area of the cleaning media 104 can be larger than the overall dimensions of the frame 102. The support members 106 are fixed to opposing sides 108 of the frame 102 a distance "I" apart across the width of the air cleaning element 100. The distance "I" is preferably between 25 and 100 mm the combination of the spacings "D" and "I" will position each section of the cleaning media 104 at an angle alpha of between 30 and 60°.

As best shown in Figure 3, the two opposing ends of the cleaning media 104 are anchored on two opposing sides of the frame 102, respectively. The two opposing ends are anchored in an identical manner.

A metal strip 116 extends substantially the entire length of the air cleaning element 100 and is fixed to flange 112 with fasteners 118. These fasteners may be threaded fasteners, rivets, or the like. The metal strip 116 compresses the free end of the cleaning media 104 against the flange 112 along the entire length of the air cleaning element 100. An adhesive layer may be provided between the metal strip 116, the free end of the cleaning media 104, and the flange 112 to hold the free end of the cleaning media 104 more firmly. While only one side (the left side) of the frame 102 is shown in detail in the lower part of Figure 3, the right side of frame 102 is constructed identically, thus there are two opposing sides with metal strips 116, fasteners 118, and adhesive to hold the two opposing ends of the cleaning media 104 to the frame 102.

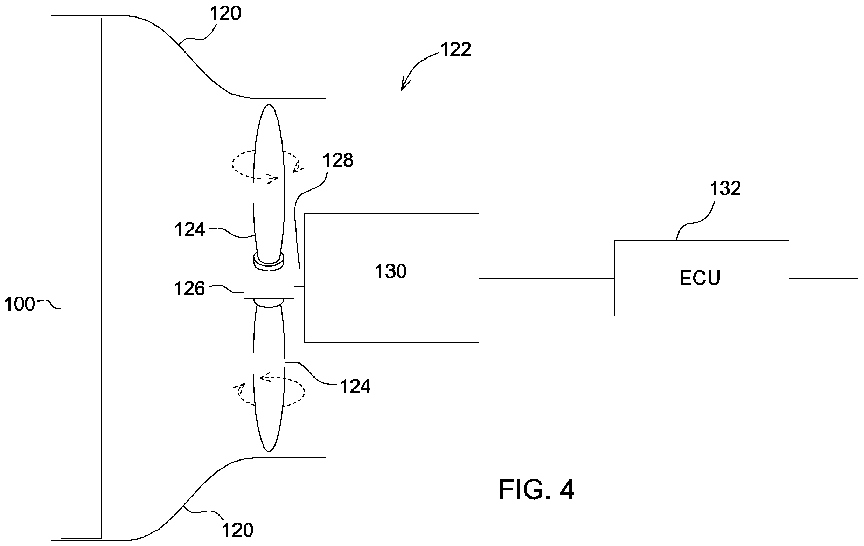

The air cleaning element 100 shown in Figures 1-4 has an irregular surface which is difficult to clean. The wire mesh itself is initially flat, but when it is formed as shown in the air cleaning element the support members hold the wire mesh in a corrugated shape. This corrugated shape is impossible to clean automatically and remotely as the work vehicle travels through a field by using the traditional cleaning devices. For this reason, a new cleaning device has been employed to obviate these problems. A novel solution to this problem is shown in Figure 5.

In Figure 5, the air cleaning element 100 is coupled to a conduit 120 (such as a fan shroud) that channels airflow to and from a fan 122. The fan 122 includes fan blades 124 that are supported on and extend from an adjustable pitch hub 126. The adjustable pitch hub 126 is supported on a motor shaft 128 that is driven in rotation by a motor 130. The motor 130 and the adjustable pitch hub 126 are controlled by an ECU 132.

During normal field operations, the ECU 132 commands the fan 122 to draw air through the air cleaning element 100 into the conduit 120, through the fan blades 124 and into the interior of the work vehicle. Once inside the work vehicle, the air can be directed into other devices in the work vehicle to perform various functions.

The ECU 132 is programmed to periodically command the adjustable pitch hub to reverse the pitch of the fan blades 124. This causes the air pressure inside the conduit to increase to a level greater than the atmospheric air pressure outside the conduit. As a result, air flow through the air cleaning element 100 is reversed and the vegetable matter accumulating on the outside of the air cleaning element 100 is blown off the air cleaning element 100.

The specific embodiment of the invention described herein is just one of many ways in which the invention can be constructed. The claims below describe the scope of the invention.

## Claims

1. An air cleaning element comprising:
a generally rectangular frame comprising first two opposing sides and second two opposing sides;
a plurality of rods supported on and extending between the first two opposing sides, wherein each rod is offset from its two adjacent rods; and
a wire mesh sheet having two ends, wherein the sheet is generally rectangular and wherein the sheet is corrugated around the plurality of rods and wherein the sheet extends to and between the two opposing sides.

2. The air cleaning element of claim 1, wherein the plurality of rods are parallel to each other.

3. The air cleaning element of claim 2, wherein the plurality of rods are equidistantly spaced from each other.

4. The air cleaning element of claim 1, wherein a first of the two ends of the sheet is anchored to a first of the second two opposing sides over substantially the entire length of the first of the second two opposing sides, and wherein a second of the two ends of the sheet is anchored to a second of the second two opposing sides over substantially the entire length of the second of the second two opposing sides.

5. The air cleaning element of claim 1, further comprising first and second elongate strips fixing first and second opposing ends of the wire mesh to first and second ones of the second opposing sides, respectively.

6. The air cleaning element of claim 5, further comprising a plurality of fasteners fixing the first and second elongate strips to the frame.

7. The air cleaning element of claim 5, wherein the two ends of the wire mesh are fixed between the frame and the first and second strips.

8. The air cleaning element of claim 1, wherein the plurality of rods are disposed to shape the wire mesh into a plurality of corrugations.

9. The air cleaning element of claim 8, wherein each of the plurality of corrugations is disposed at an angle of between 30 and 60 degrees with respect to the air cleaning element.

10. An air cleaning arrangement comprising:
the air cleaning element of claim 1;
an air conduit disposed to channel air to substantially an entire face of the air cleaning element;
a fan having a variable pitch fan hub disposed in the air conduit, wherein the fan is disposed in the conduit to drive air through the entire face of the air cleaning element; and
an ECU coupled to the variable pitch fan hub, wherein the ECU is configured to periodically reverse the pitch of the variable pitch fan hub such that flow is periodically reversed through the air cleaning element.
